# EUROPEAN PATENT APPLICATION

(11) **EP 2 786 898 A1**
(43) Date of publication of application: **08.10.2014**
(21) Application number: 11876776.3
(22) Date of filing: 01.12.2011
(51) Int. Cl.: B60Q 1/14

(54) **LIGHT DISTRIBUTION CONTROL SYSTEM FOR VEHICLE**

(71) Applicant: TOYOTA JIDOSHA KABUSHIKI KAISHA, Toyota-shi, Aichi-ken, 471-8571 (JP)
(72) Inventor: FUJIYOSHI, Satoshi, Toyota-shi, Aichi-ken, 471-8571 (JP)
(74) Representative: Kuhnen & Wacker
(86) International application number: PCT/JP2011/077835
(87) International publication number: WO 2013/080363

(57) **Abstract**

A light distribution control system for a vehicle that is configured to control a light distribution of a head lamp, the system comprising: a vehicle detecting part configured to detect a forward vehicle that travels ahead of a host vehicle; and a light distribution controlling part configured to set a non-illumination region for a region in which the forward vehicle detected by the vehicle detecting part exists, wherein the light distribution controlling part changes, between a case in which the forward vehicle detected by the vehicle detecting part is a preceding vehicle and a case in which the forward vehicle detected by the vehicle detecting part is an oncoming vehicle, at least one of a margin amount of the non-illumination region in a width direction, a movement speed of the non-illumination region, and a variable range of the non-illumination region.

## Description

### Technical Field

The present invention is related to a light distribution control system for a vehicle configured to control light distribution of a head lamp.

### Background Art

A front lighting apparatus for a vehicle is known which is configured to detect, with a camera, a forward vehicle that travels ahead of a host vehicle, and control a light distribution of a head lamp according to a position of the forward vehicle (see Patent Document 1, for example).

According to the disclosed front lighting apparatus for a vehicle, margins are set next to opposite ends of a predetermined part region in an image captured by the camera so as to determine whether the front vehicle enters the part region. If the front vehicle is detected in an enlarged region that corresponds to the part region with the margins, it is estimated that the front vehicle exists in the part region, which causes a light emitting element for illuminating the part region to turn off.

[Patent Document 1] Japanese Laid-open Patent Publication No. 2009-220649

### Disclosure of Invention

### Problem to be Solved by Invention

A positional relationship between a host vehicle and the forward vehicle changes differently between a case where the forward vehicle is a preceding vehicle and a case where the forward vehicle is an oncoming vehicle, even if the positional relationship between the host vehicle and the forward vehicle is the same at a certain timing. Thus, if a non-illumination region is formed in the same manner between the case where the forward vehicle is a preceding vehicle and the case where the forward vehicle is an oncoming vehicle, the formed non-illumination region may not be optimal.

Therefore, an object of the present invention is to provide a light distribution control system for a vehicle that can form a non-illumination region suited for a case where the forward vehicle is a preceding vehicle and a case where the forward vehicle is an oncoming vehicle.

### Means to Solve the Problem

According to one aspect of the invention, a light distribution control system for a vehicle is provided which is configured to control a light distribution of a head lamp, the system comprising:
a vehicle detecting part configured to detect a forward vehicle that travels ahead of a host vehicle; and
a light distribution controlling part configured to set a non-illumination region for a region in which the forward vehicle detected by the vehicle detecting part exists, wherein
the light distribution controlling part changes, between a case in which the forward vehicle detected by the vehicle detecting part is a preceding vehicle and a case in which the forward vehicle detected by the vehicle detecting part is an oncoming vehicle, at least one of a margin amount of the non-illumination region in a width direction, a movement speed of the non-illumination region, and a variable range of the non-illumination region.

### Advantage of the Invention

According to the invention, a light distribution control system for a vehicle can be obtained which can form a non-illumination region suited for a case where the forward vehicle is a preceding vehicle and a case where the forward vehicle is an oncoming vehicle.

### Brief Description of Drawings

Fig. 1 is a block diagram for illustrating an example of a configuration of a light distribution control system for a vehicle related to an embodiment of the present invention.
Fig. 2A is a diagram for schematically illustrating a high beam pattern in a case where it is determined that there is no forward vehicle ahead of a host vehicle.
Fig. 2B is a diagram for schematically illustrating a preceding vehicle tracking pattern in a case where it is determined that there is a forward vehicle at a relatively long distance ahead of the host vehicle.
Fig. 2C is a diagram for schematically illustrating a preceding vehicle tracking pattern in a case where it is determined that there is a forward vehicle at a relatively short distance ahead of the host vehicle.
Fig. 2D is a diagram for schematically illustrating a low beam pattern in a case where it is determined that there is a forward vehicle at a relatively short distance ahead of the host vehicle.
Fig. 3 is a diagram for schematically illustrating an example of the non-illumination region UR of the preceding vehicle tracking pattern set by a light distribution controlling part 11.
Fig. 4 is a diagram for schematically illustrating an example of the non-illumination region UR of an oncoming vehicle approaching pattern set by the light distribution controlling part 11.
Fig. 5 is a diagram for schematically illustrating an example of a target non-illumination angle calculated by the light distribution controlling part 11.
Fig. 6 is a diagram for schematically illustrating examples of respective tracking ranges (angles) in the case where the forward vehicle is a preceding vehicle and the case where the forward vehicle is an oncoming vehicle.
Fig. 7A is a diagram for schematically illustrating an example of a relationship between a change in an angle of a center position of tail lamps of the preceding vehicle in time series and a change in a tracking angle (an angle of a cut line) in time series.
Fig. 7B is a diagram for schematically illustrating an example of a relationship between a change in an angle of a center position of head lamps of the oncoming vehicle in time series and a change in a tracking angle (an angle of a cut line) in time series.
Fig. 8 is an example of a flowchart of a main process executed by a controller 1.

### Description of Reference Symbols

- 1: controller
- 2: image sensor
- 3: head lamp
- 4: shade driving apparatus
- 10: vehicle detecting part
- 11: light distribution controlling part
- 100: light distribution control system for a vehicle

### Best Mode for Carrying Out the Invention

In the following, the best mode for carrying out the present invention will be described in detail by referring to the accompanying drawings.

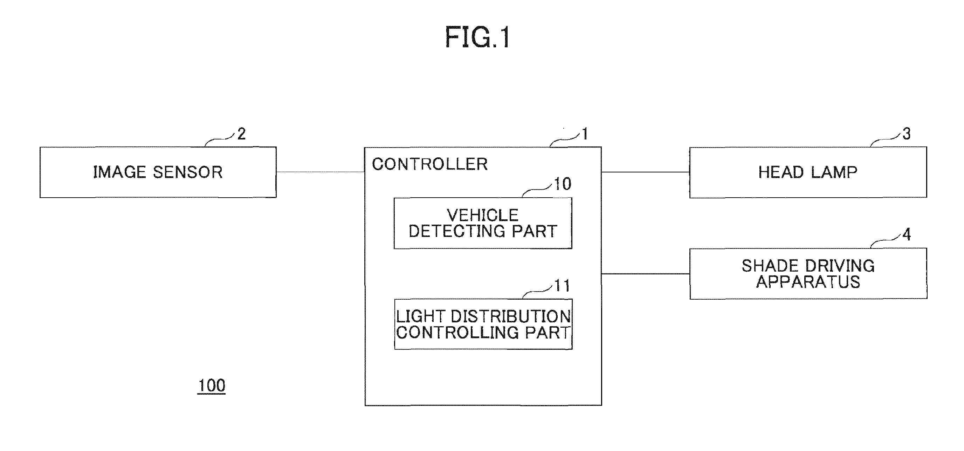

Fig. 1 is a block diagram for illustrating an example of a configuration of a light distribution control system for a vehicle 100 related to an embodiment of the present invention.

The light distribution control system for a vehicle 100 is mounted on a vehicle and performs a light distribution control of head lamps 3 based on an output of an image sensor 2 that captures a scene ahead of the vehicle. The light distribution control system for a vehicle 100 mainly includes a controller 1, the image sensor 2, the head lamps 3 and a shade driving apparatus 4.

The controller 1 is a vehicle-mounted computer that includes a CPU (Central Processing Unit), a RAM (Random Access Memory), a ROM (Read Only Memory), a NVRAM (Non Volatile Random Access Memory), etc. Programs corresponding to a vehicle detecting part 10 and a light distribution controlling part 11 are stored in the ROM. The programs are stored in the RAM, if necessary, to cause the CPU to execute processes corresponding to respective parts. It is noted that the vehicle detecting part 10 and the light distribution controlling part 11 may be implemented by any hardware resources such as an ASIC (Application Specific Integrated Circuit).

The image sensor 2 captures an image of a scene ahead of the vehicle. The image sensor 2 is a camera that includes an imaging sensor such as a CCD (Charge Coupled Device), a CMOS (Complementary Metal Oxide Semiconductor), etc. The image sensor 2 is attached to an upper part of a front glass in a cabin. The image sensor 2 outputs the captured image to the controller 1. The image sensor 2 is a color camera that can recognizes differences in a color of lamps (head lamps or tail lamps) of the forward vehicle. It is noted that, in a case of a configuration in which a near-infrared radiation is not performed, an infrared cut filter for cutting an infrared wavelength greater than 700 nm may be provided for increased color reproduction. In a case of a configuration in which the near-infrared radiation is performed, an infrared cut filter may not be provided for increased infrared sensitivity.

The headlamps 3 illuminate a scene ahead of the vehicle. For example, the headlamps 3 are of a halogen bulb type, HID (High Intensity Discharge) head lamps, LED (Light Emitting Diode) lamps, etc.

The shade driving apparatus 4 drives light blocking plates (shades) for partially blocking light from the head lamps 3. The shade driving apparatus 4 includes a motor, a solenoid, a linear actuator, etc., that rotates rotatable shades disposed in light paths of the light from the head lamps 3 or linearly moves the shades of a linear type disposed in light paths of the light from the head lamps 3 so that a width of the non-illumination region (described hereinafter) can be continuously adjusted.

Specifically, the shade driving apparatus 4 drives shades, which are provided near light sources of the head lamps 3 for partially blocking the light from the head lamps 3, based on a control signal output from the controller 1 to implement various distribution patterns (a high beam pattern, a low beam pattern, a preceding vehicle tracking pattern (described hereinafter), an oncoming vehicle approaching pattern (described hereinafter), for example) of the head lamps 3 during the travel of the vehicle 3. In the following, as an example, it is assumed that the shade driving apparatus 4 includes swivel motors and drives the swivel motors to rotate rotatable lamp holders such that positions of cut lines (described hereinafter) of the preceding vehicle tracking pattern, etc., are changed.

Next, functional elements of the controller 1 are described.

The vehicle detecting part 10 detects another vehicle (that includes a preceding vehicle that travels in the same direction as the host vehicle, and an oncoming vehicle that travels in the opposite direction with respect to the traveling direction of the host vehicle, and is referred to as "a forward vehicle" hereinafter) that travels ahead of the host vehicle based on the outputs of the image sensor 2. For example, the vehicle detecting part 10 extracts pixels (referred to as "high luminance pixels" hereinafter) in the image captured by the image sensor 2, and determines whether the forward vehicle exists based on positions of the extracted high luminance pixels.

Specifically, the vehicle detecting part 10 determines whether the preceding vehicle exists based on the presence or absence of a pixel group (a group of the high luminance pixels with red oriented colors) corresponding to the tail lamps of the preceding vehicle. Preferably, the vehicle detecting part 10 detects a pair of left and right tail lamps of the preceding vehicle to detect the presence of the preceding vehicle, and detects an angle (referred to as "preceding vehicle detection angle" hereinafter) between the traveling direction of the host vehicle and the direction of the preceding vehicle (a midpoint between the pair of left and right tail lamps, for example) with respect to the host vehicle.

Further, the vehicle detecting part 10 determines whether the oncoming vehicle exists based on the presence or absence of a pixel group (a group of the high luminance pixels with white oriented colors) corresponding to the head lamps of the oncoming vehicle. Preferably, the vehicle detecting part 10 detects a pair of left and right head lamps of the oncoming vehicle to detect the presence of the oncoming vehicle, and detects an angle (referred to as "oncoming vehicle detection angle" hereinafter) between the traveling direction of the host vehicle and the direction of the oncoming vehicle (a midpoint between the pair of left and right head lamps, for example) with respect to the host vehicle. The preceding vehicle detection angle and the oncoming vehicle detection angle are collectively referred to as "forward vehicle detection angle".

Further, the vehicle detecting part 10 derives an inter-vehicle distance between the host vehicle and the preceding vehicle or the oncoming vehicle based on a distance (a distance between the tail lamps or a distance between the head lamps) between two high luminance pixel groups that correspond to the pair of the left and right tail lamps of the preceding vehicle or the pair of the left and right head lamps of the oncoming vehicle. For example, the inter-vehicle distance is measured between an optical center of the image sensor 2 mounted on the host vehicle and a center potion of the rear end of the preceding vehicle or a center potion of the front end of the oncoming vehicle.

It is noted that the vehicle detecting part 10 may use a laser radar sensor, a millimeter wave radar sensor, an ultrasonic wave sensor, etc., to detect the inter-vehicle distance between the host vehicle and the forward vehicle, the forward vehicle detection angle, etc. Further, the vehicle detecting part 10 may utilize a parallax of a stereo camera to derive the inter-vehicle distance, the forward vehicle detection angle, etc.

The light distribution controlling part 11 controls the light distribution pattern of the head lamps 3. For example, the light distribution controlling part 11 outputs a control signal to the shade driving apparatus 4 to generate a desired light distribution pattern.

Specifically, if the vehicle detecting part 10 detects the preceding vehicle, the light distribution controlling part 11 outputs the control signal to the shade driving apparatus 4 to generate, based on the high beam pattern, a light distribution pattern (referred to as "preceding vehicle tracking pattern") that includes a concave non-illumination region such that a corresponding part of the preceding vehicle is not illuminated by the light from the head lamps 3 so as not to cause glare for a driver of the preceding vehicle.

Further, if the vehicle detecting part 10 detects the oncoming vehicle, the light distribution controlling part 11 outputs the control signal to the shade driving apparatus 4 to generate, based on the high beam pattern, a light distribution pattern (referred to as "oncoming vehicle approaching pattern") that includes a concave non-illumination region such that a corresponding part of the oncoming vehicle is not illuminated by the light from the head lamps 3 so as not to cause glare for a driver of the oncoming vehicle.

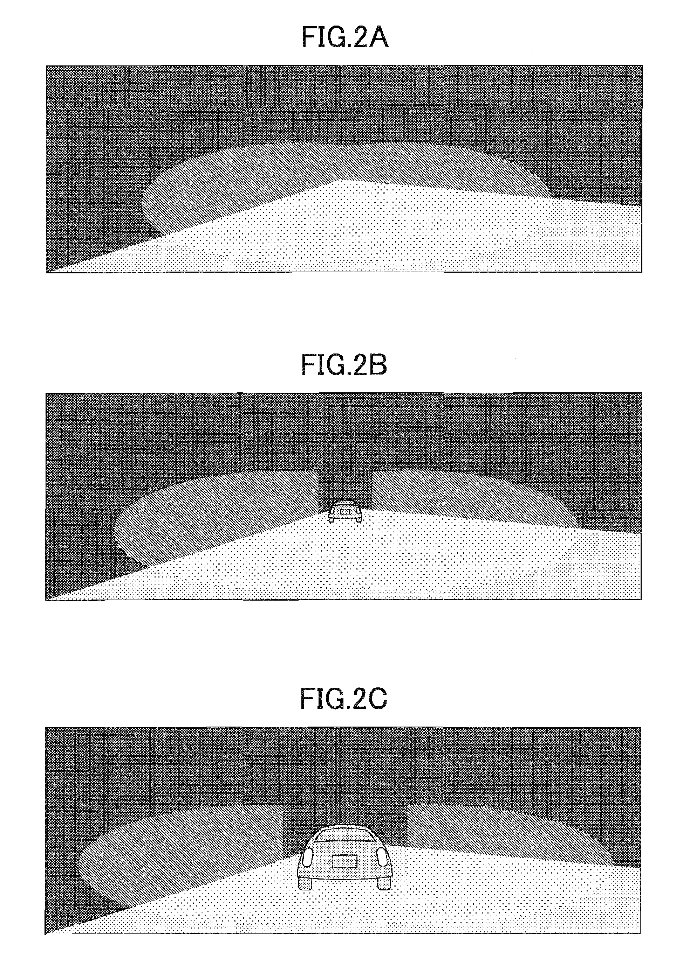

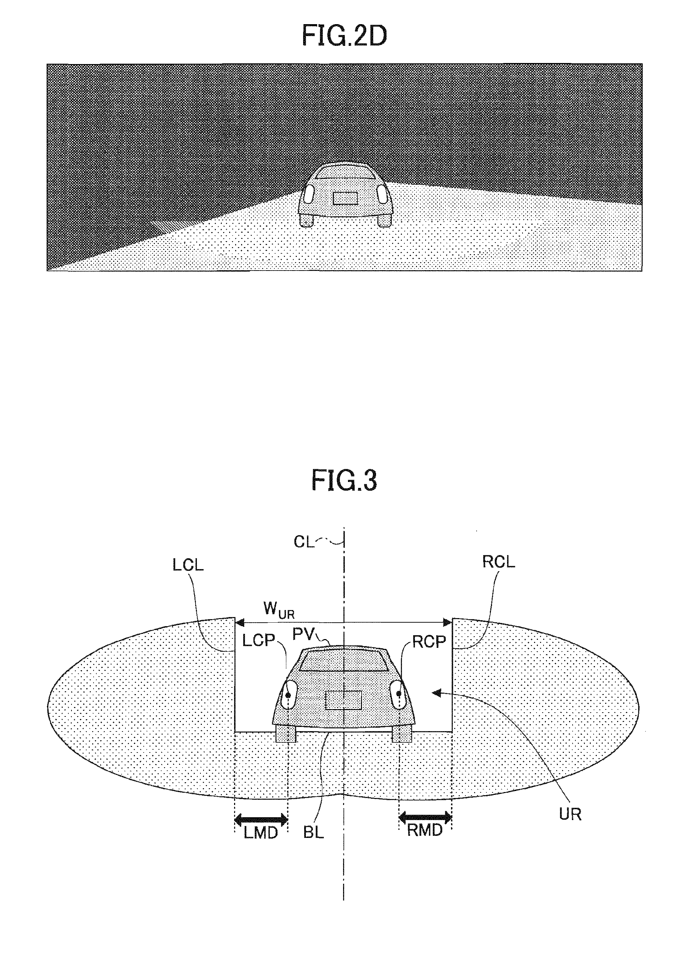

Figs. 2A through 2D are diagrams for schematically illustrating light distribution patterns generated by the light distribution controlling part 11. Fig. 2A schematically illustrates the high beam pattern in a case where it is determined that there is no forward vehicle ahead of the host vehicle. Fig. 2B schematically illustrates the preceding vehicle tracking pattern in a case where it is determined that there is the forward vehicle at a relatively long distance ahead of the host vehicle. Fig. 2C schematically illustrates the preceding vehicle tracking pattern in a case where it is determined that there is the forward vehicle at a relatively short distance ahead of the host vehicle. Fig. 2D schematically illustrates a low beam pattern in a case where it is determined that there is the forward vehicle at a relatively short distance ahead of the host vehicle.

The light distribution controlling part 11 sets the non-illumination region. For example, the light distribution controlling part 11 sets the non-illumination region (i.e., a region around the preceding vehicle which is not illuminated by the light from the head lamps 3) of the preceding vehicle tracking pattern based on the positions of the tail lamps of the preceding vehicle, or the non-illumination region (i.e., a region around the oncoming vehicle which is not illuminated by the light from the head lamps 3) of the oncoming vehicle approaching pattern based on the positions of the head lamps of the oncoming vehicle.

Specifically, the light distribution controlling part 11 sets cut lines (boundary lines between the illumination region and the non-illumination region) that are spaced horizontally and outwardly in the vehicle width direction (in the left direction from the center position of the left tail lamp in the image, or in the right direction from the center position of the right tail lamp in the image) from the center position of the tail lamps (a group of the high luminance pixels with red oriented colors) of the preceding vehicle, which is detected based on the image captured by the image sensor 2, with a predetermined margin distance.

Further, the light distribution controlling part 11 sets cut lines (boundary lines between the illumination region and the non-illumination region) that are spaced horizontally and outwardly in the vehicle width direction (in the left direction from the center position of the left head lamp in the image, or in the right direction from the center position of the right head lamp in the image) from the center position of the head lamps (a group of the high luminance pixels with white oriented colors) of the oncoming vehicle, which is detected based on the image captured by the image sensor 2, with a predetermined margin distance.

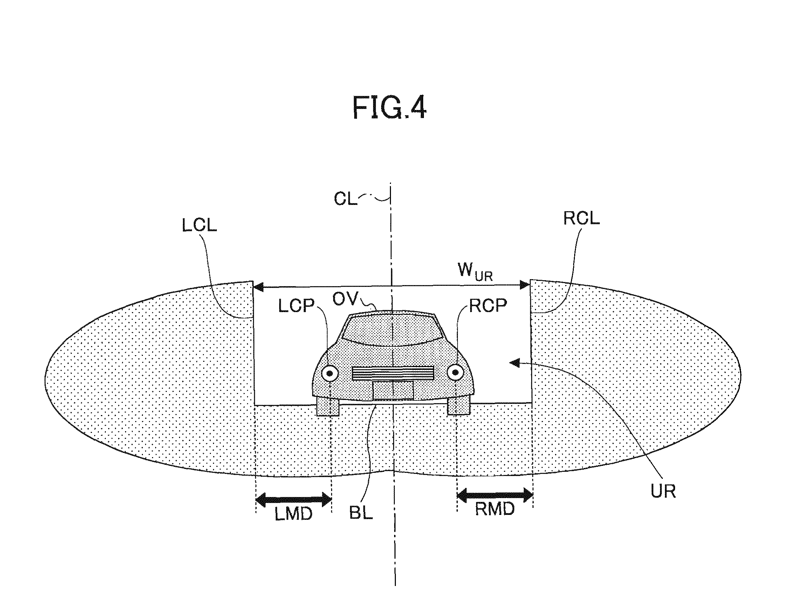

Fig. 3 is a diagram for schematically illustrating an example of the non-illumination region UR of the preceding vehicle tracking pattern set by the light distribution controlling part 11. The non-illumination region UR is delimited by a left cut line LCL, which is set at a position spaced in the left direction with a left margin distance LMD from the center position LCP of the left tail lamp of the preceding vehicle PV, a right cut line RCL, which is set at a position spaced in the right direction with a right margin distance RMD from the center position RCP of the right tail lamp of the preceding vehicle PV, and a base line BL. Fig. 4 is a diagram for schematically illustrating an example of the non-illumination region UR of the oncoming vehicle approaching pattern set by the light distribution controlling part 11. The non-illumination region UR is delimited by a left cut line LCL, which is set at a position spaced in the left direction with a left margin distance LMD from the center position LCP of the left head lamp of the oncoming vehicle OV, a right cut line RCL, which is set at a position spaced in the right direction with a right margin distance RMD from the center position RCP of the right head lamp of the oncoming vehicle OV, and a base line BL. It is noted that in Fig. 3 and Fig. 4 a reference symbol CL indicates an example of optical centers when the swivel angle is 0. Here, the optical centers of the left and right head lamps 3 are schematically illustrated such that the optical centers of the left and right head lamps 3 correspond to each other.

The left margin distance LMD and the right margin distance RMD are set differently between the case where the forward vehicle is a preceding vehicle and the case where the forward vehicle is an oncoming vehicle. Specifically, the left margin distance LMD and the right margin distance RMD are set to different values, respectively, between the case where the forward vehicle is a preceding vehicle and the case where the forward vehicle is an oncoming vehicle, even when the inter-vehicle distance is the same in both cases. This is because, even if the positional relationship between the host vehicle and the forward vehicle is the same at a certain timing, a positional relationship (relative movement) afterward between the host vehicle and the forward vehicle changes differently between the case where the forward vehicle is a preceding vehicle and the case where the forward vehicle is an oncoming vehicle.

Specifically, the left margin distance LMD and the right margin distance RMD in the case where the forward vehicle is a preceding vehicle may be set by considering an installation error and a detection error of the image sensor 2, an installation error and dimensional deviation of the head lamps 3, a control accuracy and a control speed of the shade driving apparatus 4, a rolling angle of the forward vehicle, which travels on a curved road, in a vehicle width direction, reflection on a vehicle body and door mirrors of the forward vehicle, or the like. In other words, the left margin distance LMD and the right margin distance RMD in the case where the forward vehicle is a preceding vehicle are distances that are predetermined to generate the non-illumination region UR with a sufficient size to prevent glare for a driver of the preceding vehicle even when such error factors have an influence. Basically, the left margin distance LMD and the right margin distance RMD in the case where the forward vehicle is a preceding vehicle are set such that they have the same value; however, the left margin distance LMD and the right margin distance RMD in the case where the forward vehicle is a preceding vehicle may have different values.

The left margin distance LMD and the right margin distance RMD in the case where the forward vehicle is an oncoming vehicle are set to be greater than those in the case where the forward vehicle is a preceding vehicle. This is because, in general, the motion of the oncoming vehicle with respect to the host vehicle is quicker than that of the preceding vehicle.

An increment ΔD of the left margin distance LMD and the right margin distance RMD in the case where the forward vehicle is an oncoming vehicle with respect to the left margin distance LMD and the right margin distance RMD in the case where the forward vehicle is a preceding vehicle may be arbitrary. For example, an apparent lateral movement distance of the forward vehicle in the image becomes greater as the inter-vehicle distance becomes shorter even if an actual lateral movement distance of the forward vehicle is the same. Thus, the increment ΔD may be set to such a value with which the glare for the driver of the oncoming vehicle can be prevented with high reliability at the time of passing the oncoming vehicle. In other words, the increment ΔD may be set based on an assumed value of the relative speed or the relative inter-vehicle distance at the time when the oncoming vehicle goes out of the tracking range (i.e., at the time of passing the oncoming vehicle). Typically, the increment ΔD may be within a range from 30 percent to 70 percent of the left margin distance LMD and the right margin distance RMD in the case where the forward vehicle is a preceding vehicle, for example.

In this way, the left margin distance LMD and the right margin distance RMD in the case where the forward vehicle is an oncoming vehicle are set to be greater than those in the case where the forward vehicle is a preceding vehicle by the increment ΔD. With this arrangement, it becomes possible to reduce the glare for the driver of the oncoming vehicle even when the passing speed at the time of passing the oncoming vehicle is relatively high, while ensuring the increased bright illumination range has a necessary minimum margin distance with respect to the preceding vehicle.

It is noted that the left margin distance LMD and the right margin distance RMD in the case where the forward vehicle is a preceding vehicle may be set regardless of the inter-vehicle distance between the host vehicle and the forward vehicle. Alternatively, the left margin distance LMD and the right margin distance RMD in the case where the forward vehicle is a preceding vehicle may be set such that they become greater as the inter-vehicle distance between the host vehicle and the forward vehicle becomes smaller. Accordingly, the left margin distance LMD and the right margin distance RMD in the case where the forward vehicle is an oncoming vehicle may be set regardless of the inter-vehicle distance between the host vehicle and the forward vehicle. Alternatively, the left margin distance LMD and the right margin distance RMD in the case where the forward vehicle is an oncoming vehicle are set such that they are greater than the left margin distance LMD and the right margin distance RMD in the case where the forward vehicle is a preceding vehicle, and they become greater as the inter-vehicle distance between the host vehicle and the forward vehicle becomes shorter.

The light distribution controlling part 11 calculates a target non-illumination angle based on the inter-vehicle distance between the host vehicle and the forward vehicle detected by the vehicle detecting part 10, the forward vehicle detection angle, and the set margin distance, and outputs the calculated target non-illumination angle to the shade driving apparatus 4 to form the desired non-illumination region UR.

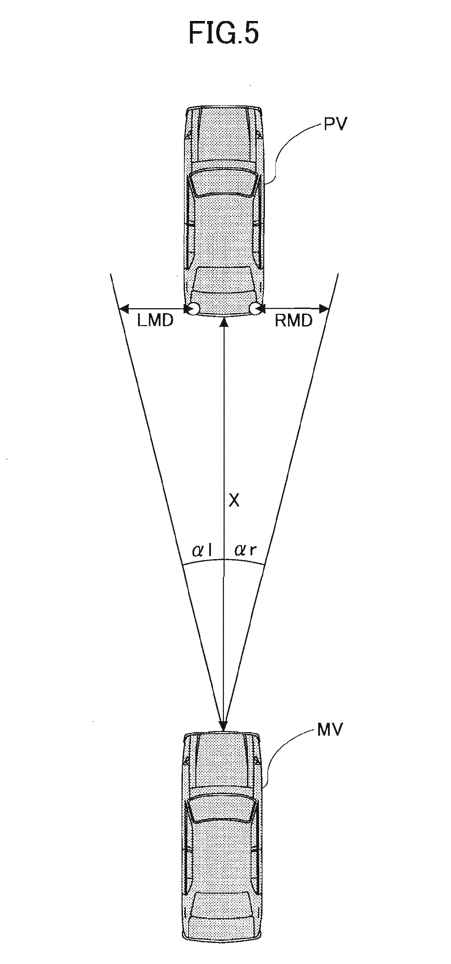

Fig. 5 is a diagram for schematically illustrating an example of a target non-illumination angle calculated by the light distribution controlling part 11. Here, the case where the forward vehicle is a preceding vehicle PV is explained; however, the same holds true for the case where the forward vehicle is an oncoming vehicle.

A left target non-illumination region αl is calculated based on the inter-vehicle distance X between the host vehicle MV and the preceding vehicle PV detected by the vehicle detecting part 10; the forward vehicle detection angle (0 degrees in this example); and the set left margin distance LMD (strictly, a distance obtained by adding, to the left margin distance LMD, the distance from the center position of the preceding vehicle PV to the center position of the left tail lamp). The right target non-illumination region αl is calculated based on the inter-vehicle distance X between the host vehicle MV and the preceding vehicle PV detected by the vehicle detecting part 10; the forward vehicle detection angle (0 degrees in this example); and the set right margin distance RMD (strictly, a distance obtained by adding, to the right margin distance RMD, the distance from the center position of the preceding vehicle PV to the center position of the right tail lamp).

Further, preferably, if the forward vehicle is an oncoming vehicle, the light distribution controlling part 11 sets the maximum rotation positions of the shades (i.e., the maximum rotation positions of the swivel motors) with the shade driving apparatus 4 such that the maximum rotation is smaller than that in the case where the forward vehicle is preceding vehicle. In other words, an upper value for a variable range WUR (see Fig. 3 and Fig. 4) of the non-illumination region UR in the case where the forward vehicle is a preceding vehicle is set such that it is smaller than that in the case where the forward vehicle is an oncoming vehicle. The upper value (the outermost positions of the cut lines) for a variable range WUR (see Fig. 3 and Fig. 4) of the non-illumination region UR defines a tracking range of the forward vehicle in the light distribution control. In other words, when the position of the forward vehicle moves to such a position where the width of the non-illumination region UR exceeds the upper value, the preceding vehicle tracking pattern or oncoming vehicle approaching pattern is changed to the low beam pattern. Thus, it means that the light distribution controlling part 11 sets the tracking range such that the tracking range in the case where the forward vehicle is the preceding vehicle is smaller than that in the case where the forward vehicle is an oncoming vehicle.

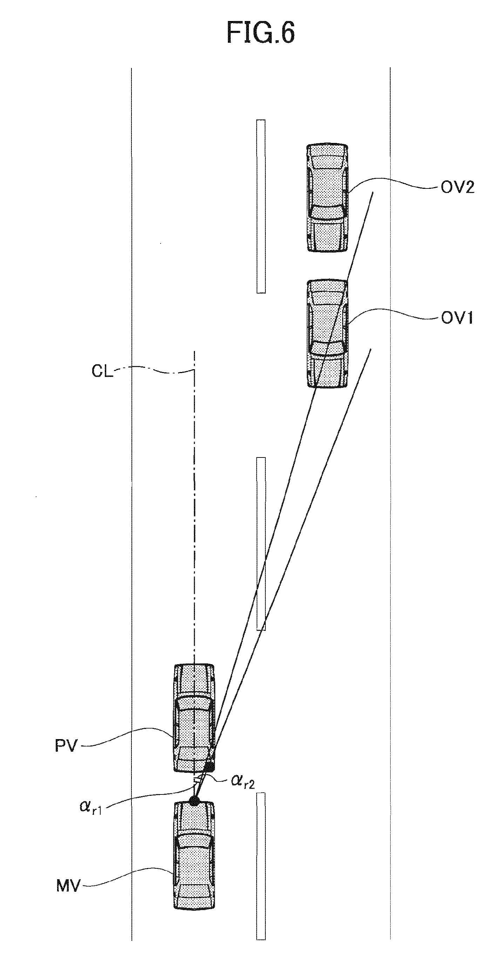

With reference to Fig. 6, a meaning why the way of setting the tracking range (angle) is changed between the case where the forward vehicle is the preceding vehicle and the case where the forward vehicle is an oncoming vehicle.

Fig. 6 is a diagram for schematically illustrating examples of respective tracking ranges (angles) in the case where the forward vehicle is a preceding vehicle and the case where the forward vehicle is an oncoming vehicle. In Fig. 6, right limit angles αr1 and αr2 of the tracking range are illustrated. The right limit angle is explained hereinafter; however, this holds true for a left limit angle. The limit angle αr1 represents the right limit angle of the tracking range in a case where the forward vehicle is an oncoming vehicle. If the limit angle αr1 is used for the case where the forward vehicle is a preceding vehicle, the forward vehicle exceeds the tracking range when the inter-vehicle distance between the preceding vehicle PV and the host vehicle MV is short, as illustrated in Fig. 6. In this case, the light distribution pattern of the head lamps 3 are changed to the low beam pattern, which means that effects of the preceding vehicle tracking pattern (brighter than the low beam pattern) such as increased visibility cannot be obtained. Further, the switching frequency between the low beam pattern and the preceding vehicle tracking pattern increases due to the increase or the decrease of the inter-vehicle distance in the case where the inter-vehicle distance is short, which may lead to inconvenience.

The limit angle αr2 represents the right limit angle of the tracking range in case where the forward vehicle is a preceding vehicle. The limit angle αr2 is greater than the limit angle αr1 that is used for the case where the forward vehicle is a preceding vehicle, as illustrated in Fig. 6. Thus, when the limit angle αr2 is used for the case where the forward vehicle is a preceding vehicle, the preceding vehicle PV does not easily exceed the tracking range even if the inter-vehicle distance between the preceding vehicle PV and the host vehicle MV is short. Therefore, it is possible to obtain effects of the preceding vehicle tracking pattern such as increased visibility. Further, when the limit angle αr2 is used for the case where the forward vehicle is a preceding vehicle, the preceding vehicle PV does not easily exceed the tracking range even if the preceding vehicle PV enters a curved road. Therefore, it is possible to obtain effects of the preceding vehicle tracking pattern such as increased visibility.

On the other hand, if the limit angle αr2 is used for the case where the forward vehicle is an oncoming vehicle, the tracking range is enlarged and the oncoming vehicle approaching pattern can be kept even for the oncoming vehicle OV1. However, the inter-vehicle distance with respect to the oncoming vehicle OV1 is shorter than that with respect to the oncoming vehicle OV2, which may cause glare for the driver of the oncoming vehicle at the time of passing the oncoming vehicle. To the contrary, by using the limit angle αr1, which is smaller than the limit angle αr2, in the case where the forward vehicle is an oncoming vehicle, it becomes possible to prevent the glare for the driver of the oncoming vehicle at the time of passing the oncoming vehicle.

Further, preferably, if the forward vehicle is an oncoming vehicle, the light distribution controlling part 11 increases a driving speed of the shades (i.e., driving speed of the swivel motors) with the shade driving apparatus 4 with respect to the case where the forward vehicle is preceding vehicle. In other words, when the target non-illumination angles (αl and αr) are increased or decreased by the same angle Δα, the increase or the decrease speed is set higher in the case where the forward vehicle is an oncoming vehicle than in the case where the forward vehicle is a preceding vehicle. In other words, the tracking speed of the cut lines (movement speed of the non-illumination region UR) is set higher in the case where the forward vehicle is an oncoming vehicle than in the case where the forward vehicle is a preceding vehicle. This is because, in general, the relative motion of the oncoming vehicle with respect to the host vehicle is quicker than that of the preceding vehicle.

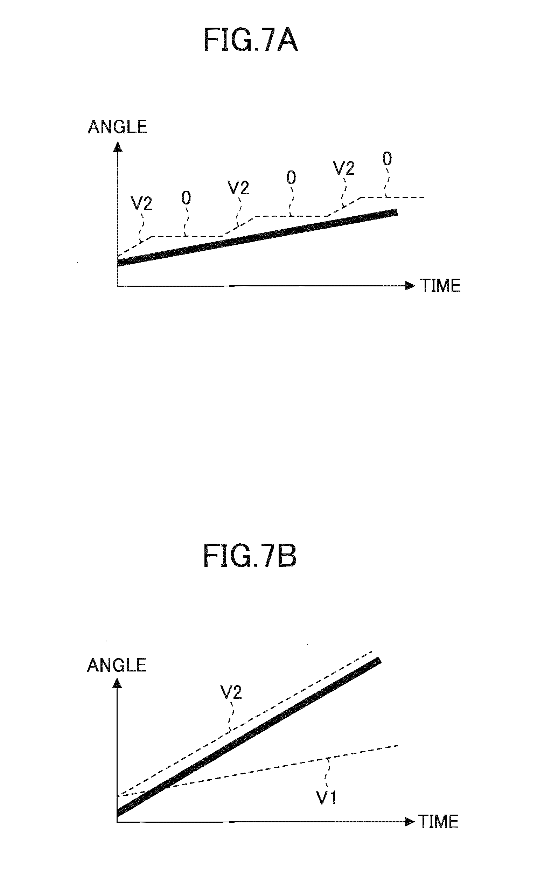

Fig. 7A is a diagram for schematically illustrating an example of a relationship between a change in an angle of a center position of the tail lamps of the preceding vehicle in time series and a change in the tracking angle (angle of the cut lines) in time series. Fig. 7B is a diagram for schematically illustrating an example of a relationship between a change in an angle of a center position of the head lamps of the oncoming vehicle in time series and a change in the tracking angle (angle of the cut lines) in time series. In Fig. 7A, the change in the angle of the center position of the tail lamps of the preceding vehicle in time series is indicated by a bold line, and the change in the tracking angle in time series is indicated by a dotted line. In Fig. 7B, the change in the angle of the center position of the head lamps of the oncoming vehicle in time series is indicated by a bold line, and the change in the tracking angle in time series is indicated by a dotted line.

In the examples illustrated in Fig. 7A and Fig. 7B, it is assumed as a typical case that the relative movement of the oncoming vehicle with respect to the host vehicle is quicker than that of the preceding vehicle, as indicated by bold lines in Fig. 7A and Fig. 7B. As illustrated in Fig. 7B, when the forward vehicle is an oncoming vehicle, the change in the angle of the center position of the head lamps of the oncoming vehicle, which is relatively high-speed, cannot be tracked if a relatively slow tracking speed V1 is used as a change speed of the tracking angle (i.e., the tracking speed). On the other hand, if a relatively quick tracking speed V2 is used as a change speed of the tracking angle, the change in the angle of the center position of the head lamps of the oncoming vehicle, which is relatively high-speed, can be appropriately tracked. Further, as illustrated in Fig. 7A, when the forward vehicle is a preceding vehicle, the on/off of the swivel motor is repeated (i.e., repeated between the tracking speed V2 and 0) with respect to the change in the angle of the center position of the tail lamps of the preceding vehicle, which is relatively low-speed, if a relatively quick tracking speed V2 is used as a change speed of the tracking angle, as illustrated in Fig. 7A. In this case, the cut lines move ineptly. Thus, by using the relatively slow tracking speed V1 as a change speed of the tracking angle when the forward vehicle is a preceding vehicle, it becomes possible to prevent such an inept movement and keep a good tracking ability.

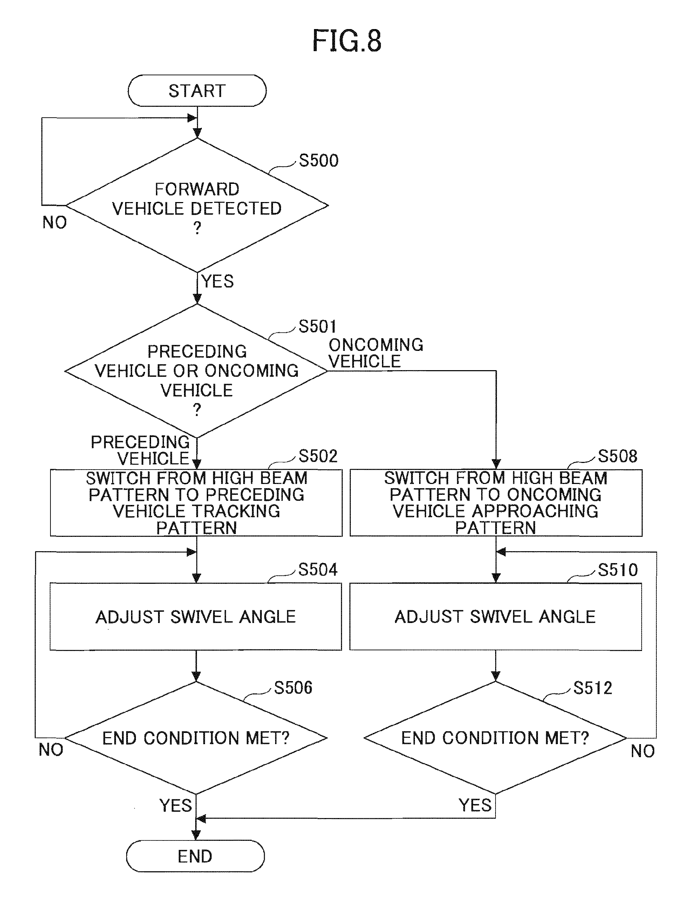

Fig. 8 is an example of a flowchart of a main process executed by the controller 1. The process shown in Fig. 8 may be initiated when the headlamps 3 are in their ON states and a light distribution control switch (not illustrated) of the headlamps 3 is in its ON state, for example, and executed repeatedly every predetermined cycle.

In step 500, it is determined whether a forward vehicle is detected by the vehicle detecting part 10. If the forward vehicle is detected, the process routine goes to step 501. It is noted that the high beam patterns (see Fig. 2A) are formed as an initial pattern, for example, during a period in which the forward vehicle is not detected.

In step 501, it is determined whether a forward vehicle detected by the vehicle detecting part 10 is a preceding vehicle or an oncoming vehicle. It is noted that the determination is based on the color information of the lamps (the head lamps or the tail lamps) of the forward vehicle captured by the image sensor 2, as described above. Alternatively, the determination may be based on the relative speed utilizing the fact that, in general, the relative speed of the oncoming vehicle is higher than that of the preceding vehicle. If the forward vehicle is a preceding vehicle, the process routine goes to step 502, and if the forward vehicle is an oncoming vehicle, the process routine goes to step 508.

In step 502, the light distribution controlling part 11 generates the preceding vehicle tracking pattern as described above based on the information about the preceding vehicle detected by the vehicle detecting part 10. With this arrangement, the light distribution pattern of the head lamps 3 is switched from the high beam pattern to the preceding vehicle tracking pattern. At that time, the preceding vehicle tracking pattern includes the non-illumination region UR (see Fig. 3) set as described above.

In step 504, the light distribution controlling part 11 calculates the target non-illumination angle and drives the shades with the shade driving apparatus 4 (i.e., adjusts the swivel angles) such that the calculated target non-illumination angle is implemented. At that time, the driving speed of the swivel motors may be a predetermined tracking speed V1 for the preceding vehicle tracking situation.

In step 506, the light distribution controlling part 11 determines whether an end condition of the light distribution control for the preceding vehicle is met. If the end condition is met, the process for the forward vehicle detected this time is terminated. The end condition includes a case where the preceding vehicle is no longer detected and a case where the preceding vehicle goes out of a predetermined tracking range. The predetermined tracking range may be the tracking range for the preceding vehicle tracking situation. When the preceding vehicle goes out of the predetermined tracking range, the preceding vehicle tracking pattern may be changed to the low beam pattern. When the preceding vehicle is no longer detected, the preceding vehicle tracking pattern may be changed to the high beam pattern. On the other hand, if the end condition is not met, the process routines returns to step 504 where the swivel angles are adjusted according to the change in the position of the preceding vehicle. In this way, the positions of the cut lines are changed according to the change in the position of the preceding vehicle every predetermined cycle until the end condition is met. Also, during this time period, the driving speed of the swivel motors may be the predetermined tracking speed V1 for the preceding vehicle tracking situation.

In step 508, the light distribution controlling part 11 generates the oncoming vehicle approaching pattern as described above based on the information about the oncoming vehicle detected by the vehicle detecting part 10. With this arrangement, the light distribution pattern of the head lamps 3 is switched from the high beam pattern to the oncoming vehicle approaching pattern. At that time, the oncoming vehicle approaching pattern includes the non-illumination region UR (see Fig. 4) set as described above. It is noted that the non-illumination region UR of the oncoming vehicle approaching pattern is set such that the non-illumination region UR of the oncoming vehicle approaching pattern has a greater margin distance than the non-illumination region UR of the preceding vehicle tracking pattern, as described above.

In step 510, the light distribution controlling part 11 calculates the target non-illumination angle and drives the shades with the shade driving apparatus 4 (i.e., adjusts the swivel angles) such that the calculated target non-illumination angle is implemented. At that time, the driving speed of the swivel motors may be a predetermined tracking speed V2 for the oncoming vehicle approaching situation. As described above, preferably, the tracking speed V2 is greater than the tracking speed V1 for the preceding vehicle tracking situation. However, the tracking speed V2 (and also the tracking speed V1) may be constant or variable. If the tracking speed V2 is variable, the tracking speed V2 may be set according to the inter-vehicle distance between the host vehicle and the preceding vehicle derived by the vehicle detecting part 10 such that the tracking speed V2 becomes greater as the inter-vehicle distance becomes smaller.

In step 512, the light distribution controlling part 11 determines whether an end condition of the light distribution control for the oncoming vehicle is met. If the end condition is met, the process for the forward vehicle detected this time is terminated. The end condition includes a case where the oncoming vehicle is no longer detected and a case where the oncoming vehiclee goes out of a predetermined tracking range. The predetermined tracking range may be the tracking range for the oncoming vehicle approaching situation. As described above, preferably, the tracking range for the oncoming vehicle approaching situation is narrower than the tracking range for the preceding vehicle tracking situation (see Fig. 6). When the oncoming vehicle goes out of the predetermined tracking range, the oncoming vehicle approaching pattern may be changed to the low beam pattern. When the preceding vehicle is no longer detected, the oncoming vehicle approaching pattern may be changed to the high beam pattern. On the other hand, if the end condition is not met, the process routines returns to step 510 where the swivel angles are adjusted according to the change in the position of the oncoming vehicle. In this way, the positions of the cut lines are changed according to the change in the position of the oncoming vehicle every predetermined cycle until the end condition is met. Also, during this time period, the driving speed of the swivel motors may be the predetermined tracking speed V2 for the oncoming vehicle approaching situation.

The present invention is disclosed with reference to the preferred embodiments. However, it should be understood that the present invention is not limited to the above-described embodiments, and variations and modifications may be made without departing from the scope of the present invention.

For example, in the embodiments described above, the margin amount for the non-illumination region is defined using an order of a distance, such as a left margin distance LMD and a right margin distance RMD; however, it may be defined by other physical quantities (angle such as a margin angle, for example). In the case of using the margin angle, the target non-illumination angles (αl and αr) may be calculated with the left margin distance LMD of 0 and the right margin distance RMD of 0, and a final target non-illumination angles may be calculated by adding predetermined margin angles (left and right, respectively) to the calculated target non-illumination angle (αl and αr). In this case, similarly, the predetermined margin angles to be added may be set such that the predetermined margin angles in the case where the forward vehicle is an oncoming vehicle are greater than those in the case where the forward vehicle is a preceding vehicle.

Further, in the embodiments described above, since the tail lamps or the head lamps of the forward vehicle are recognized by image processing, reference points for the left margin distance LMD and the right margin distance RMD are the center points of the tail lamps or the head lamps; however, other reference positions may be used as reference points. For example, the left margin distance LMD and the right margin distance RMD may be defined by using the left and right ends (edges) of the forward vehicle. In this case, the positions of the left and right ends of the forward vehicle may be directly detected by the image processing or estimated based on the image recognition results (detection results of the positions) of the tail lamps or the head lamps.

Further, in the embodiments described above, the increment ΔD of the left margin distance LMD and the right margin distance RMD in the case where the forward vehicle is an oncoming vehicle with respect to the left margin distance LMD and the right margin distance RMD in the case where the forward vehicle is a preceding vehicle is constant; however, the increment ΔD may be variable. For example, the increment ΔD may be set such that the increment ΔD becomes greater as the inter-vehicle distance between the host vehicle and the forward vehicle becomes smaller.

Further, in the embodiments described above, all the three elements, that is to say, the margin distances (the left margin distance LMD and the right margin distance RMD), the driving speed of the swivel motors and the tracking range are changed between the case where the forward vehicle is a preceding vehicle and the case where the forward vehicle is an oncoming vehicle; however, only an arbitrary one of these three elements may be changed, or only arbitrary two of these three elements may be changed.

Further, in the embodiments described above, the light distribution control system 100 controls the light distribution pattern by driving the shades with the shade driving apparatus 4; however, the head lamps formed by a plurality of light emitting diodes, instead of the shades, may be used to control the light distribution pattern by turning a part of the light emitting diodes off.

## Claims

1. A light distribution control system for a vehicle that is configured to control a light distribution of a head lamp, the system comprising:
a vehicle detecting part configured to detect a forward vehicle that travels ahead of a host vehicle; and
a light distribution controlling part configured to set a non-illumination region for a region in which the forward vehicle detected by the vehicle detecting part exists, wherein
the light distribution controlling part changes, between a case in which the forward vehicle detected by the vehicle detecting part is a preceding vehicle and a case in which the forward vehicle detected by the vehicle detecting part is an oncoming vehicle, at least one of a margin amount of the non-illumination region in a width direction, a movement speed of the non-illumination region, and a variable range of the non-illumination region.

2. The light distribution control system of claim 1, wherein if the forward vehicle detected by the vehicle detecting part is a preceding vehicle, the light distribution controlling part increases the margin amount of the non-illumination region in a width direction with respect to the case in which the forward vehicle detected by the vehicle detecting part is an oncoming vehicle.

3. The light distribution control system of claim 1 or 2, wherein if the forward vehicle detected by the vehicle detecting part is an oncoming vehicle, the light distribution controlling part increases the movement speed of the non-illumination region with respect to the case in which the forward vehicle detected by the vehicle detecting part is a preceding vehicle.

4. The light distribution control system of any one of claims 1 through 3, wherein if the forward vehicle detected by the vehicle detecting part is an oncoming vehicle, the light distribution controlling part decreases the variable range of the non-illumination region with respect to the case in which the forward vehicle detected by the vehicle detecting part is a preceding vehicle.
